# FASCICULE DE BREVET EUROPEEN

(11) **EP 2 570 189 B1**
(45) Date de publication et mention de la délivrance du brevet: **06.12.2017**
(21) Numéro de dépôt: 12192402.1
(22) Date de dépôt: 28.06.2007
(51) Int. Cl.: B01L 7/02, B01L 9/00, B02C 17/14

(54) **Appareil de broyage d'échantillons biologiques**
Zerkleinerungsgerät für biologische Proben
Apparatus for grinding biological samples

(30) Priorité: 30.06.2006 FR 0605944
(43) Date de publication de la demande: 20.03.2013
(62) Demande divisionnaire de: 07803803.1
(73) Titulaire: Bertin Technologies, 78180 Montigny-le-Bretonneux (FR)
(72) Inventeur: KUNC, Thierry, 78000 VERSAILLES (FR); BOUGY, Jean-Jacques, 78890 GARANCIERES (FR); BOQUET, Jean, 78610 LE PERRAY EN YVELINES (FR); VALLAYER, Julien, 78950 GAMBAIS (FR); SOREL, Emmanuelle, 28260 ROUVRES (FR)
(74) Mandataire: Ramey, Daniel

(56) Documents cités:
- DE-U1- 29 706 031
- FR-A1- 2 858 057
- US-A- 4 295 613
- US-A- 5 577 837
- US-B1- 6 235 501

## Description

L'invention concerne un appareil de broyage d'échantillons biologiques, comprenant un plateau de support de tubes contenant des échantillons et des moyens d'entraînement du plateau en mouvement oscillant autour d'un centre de rotation situé sur l'axe du plateau.

Un tel appareil est décrit en particulier dans les documents WO-A-2004/012851 et FR-A-2 872 233 et comprend des paliers concentriques montés l'un à l'intérieur de l'autre pour le support et le centrage du plateau porte-tubes, ces paliers étant disposés entre une partie suspendue élastiquement de l'appareil et un arbre d'entraînement portant le plateau.

Le plateau est immobilisé en rotation autour de l'arbre d'entraînement de sorte que les tubes contenant les échantillons sont soumis à un mouvement alternatif curviligne à fréquence élevée et que les échantillons qu'ils contiennent sont broyés et homogénéisés par des microbilles, par exemple de verre ou de céramique, contenues avec les échantillons dans les tubes.

Ce type de broyage est très efficace et très rapide mais a pour inconvénient une augmentation assez importante de la température des échantillons dans les tubes. Même lorsque les tubes contenant les échantillons sont refroidis préalablement au broyage, la température des échantillons en fin de broyage peut atteindre ou dépasser des valeurs de l'ordre de 60 à 70° C, auxquelles certaines caractéristiques des échantillons sont modifiées de façon irréversible. C'est le cas par exemple des protéines dont l'activité est déterminée à la fois par leur séquence et par leur structure tridimensionnelle, cette structure étant détruite par chauffage. US 6,235,501 B1 divulgue également un dispositif de broyage d'échantillons biologiques. Le refroidissement des échantillons lors du broyage au moyen d'un fluide froid y est brièvement discuté.

US 5,577,837 décrit un dispositif d'agitation de milieux de culture avec un système de régulation de température apte à refroidir ces milieux de culture.

L'invention a notamment pour but d'apporter une solution simple, efficace, et satisfaisante à ce problème.

Elle propose à cet effet, un appareil pour le broyage d'échantillons biologiques, comprenant un plateau de support de tubes contenant les échantillons et des moyens d'entraînement du plateau en mouvement oscillatoire autour d'un centre de rotation situé sur l'axe du plateau, caractérisé en ce que des moyens de refroidissement des tubes sont portés par une partie de l'appareil et entourent le plateau précité pour délimiter une zone refroidie comprenant la zone d'oscillation des tubes portés par le plateau, les moyens de refroidissement comprenant une paroi annulaire sensiblement en forme de bol, délimitant ladite zone refroidie et comportant des moyens de positionnement ou de fixation sur une partie fixe de l'appareil.

Les moyens de refroidissement, qui peuvent être fixes ou amovibles, permettent de maintenir les échantillons à une température de quelques degrés au-dessus de zéro en fin de broyage, de sorte que la structure tridimensionnelle des protéines contenues dans ces échantillons n'est pas altérée.

Selon l'invention, les moyens de refroidissement comprennent une paroi annulaire, sensiblement en forme de bol, qui délimite ladite zone refroidie et comporte des moyens d'appui ou de fixation sur une partie de l'appareil.

Cette paroi annulaire peut être à une température nettement inférieure à celle des tubes et par exemple inférieure à 0°C lorsqu'elle est mise en place sur l'appareil, de façon à absorber la chaleur rayonnée par les tubes portés par le plateau, cette absorption étant suffisante pour maintenir les échantillons contenus dans les tubes à une température de l'ordre de 4°C par exemple, en fin de broyage.

En variante, cette paroi annulaire peut être équipée de moyens d'alimentation ou de circulation d'un fluide froid.

En particulier, cette paroi peut être équipée de conduits de circulation d'un gaz cryogénique tel que l'azote et de buses d'éjection permettant le refroidissement local des tubes par des jets de gaz froid.

Selon une autre variante, cette paroi annulaire peut être équipée de moyens thermoélectriques de refroidissement générant du froid par effet Peltier.

Avantageusement, les moyens de refroidissement selon l'invention comprennent des moyens d'aspiration du gaz réchauffé qui est présent dans la zone refroidie incluant la zone d'oscillation des tubes portés par le plateau.

L'aspiration continue ou discontinue du gaz présent dans cette zone améliore le maintien des tubes à une température basse souhaitée.

L'appareil peut comprendre également un accessoire, du type pince multiple automatique, pour la prise simultanée d'une pluralité de tubes disposés sur un support commun, le transport de cette pluralité de tubes et le dépôt des tubes simultanément dans les logements prévus sur le plateau de l'appareil, la prise des tubes étant réalisée automatiquement par encliquetage et le dépôt des tubes étant réalisé par une seule manoeuvre d'un organe de commande prévu sur l'accessoire.

Il est important en effet que les tubes qui sont refroidis avant broyage puissent être mis en place sur le plateau de l'appareil en un temps aussi court que possible pour éviter leur réchauffement partiel avant broyage.

L'accessoire selon l'invention permet de saisir simultanément tous les tubes (par exemple au nombre de 24) qui doivent être mis en place sur le plateau et de les déposer simultanément dans leurs logements du plateau.

Dans une forme préférée de réalisation, cet accessoire comprend un capot circulaire destiné à coiffer les extrémités supérieures des tubes à saisir et équipé d'une pluralité de moyens d'encliquetage destinés à s'engager et à se bloquer sur les extrémités des tubes, et un organe de commande formé par un bouton poussoir ou par un bouton quart de tour, par exemple, qui est monté sur le capot et est destiné à agir simultanément sur tous les moyens d'encliquetage pour les ouvrir et permettre la libération des extrémités des tubes.

Cet accessoire facilite grandement l'utilisation de l'appareil selon l'invention.

L'invention sera mieux comprise et d'autres détails, caractéristiques et avantages de celle-ci apparaîtront plus clairement à la lecture de la description qui suit, faite à titre d'exemple en référence aux dessins annexés, dans lesquels :
- la figure 1 est une vue schématique en coupe axiale d'un appareil selon l'invention ;
- la figure 2 est une vue schématique à plus grande échelle d'une partie de l'appareil de la figure 1 ;
- la figure 3 illustre une variante de réalisation de l'appareil ;
- les figures 4 et 5 sont des vues schématiques en coupe et en perspective de l'accessoire de prise de tubes ;
- la figure 6 est une vue schématique en perspective d'un support de tubes ; et
- les figures 7a, 7b et 7c sont des vues schématiques illustrant le fonctionnement de l'accessoire de prise de tubes.

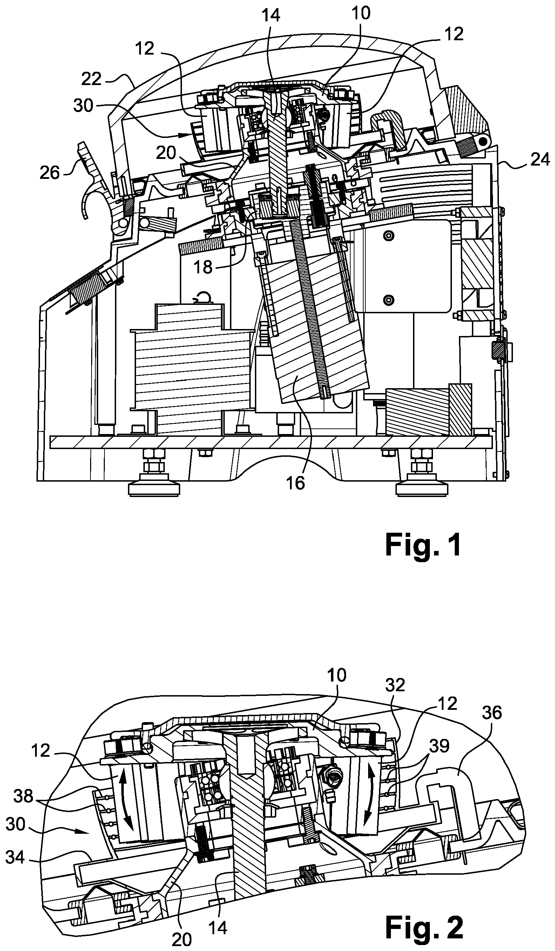

L'appareil de broyage selon l'invention, qui est représenté schématiquement aux figures 1 et 2, est du type décrit dans le document FR-A-2 872 233 et comprend essentiellement un plateau 10 portant des tubes à échantillon 12 à sa périphérie et monté en bout d'un arbre 14 entraîné en mouvement oscillant autour d'un centre de rotation situé sur l'axe de l'arbre, par un moteur électrique 16 au moyen d'un excentrique 18.

L'arbre 14 est supporté et centré sur une partie 20 élastiquement suspendue de l'appareil au moyen d'un système de paliers concentriques montés les uns à l'intérieur des autres, comprenant un palier à rotule et à billes porté par l'arbre 14 et tournant à l'intérieur de deux roulements à billes axialement superposés comme décrit dans le document FR-A-2 872 233.

L'appareil comprend encore, comme représenté en figure 1, un capot pivotant 22 porté par une carrosserie fixe 24 et venant recouvrir le plateau 10 en vue du broyage des échantillons contenus dans les tubes. Des moyens de verrouillage 26 permettent de maintenir le capot 22 dans la position représentée en figure 1 pendant le broyage des échantillons.

Pendant ce broyage, le plateau 10 est immobilisé en rotation autour de l'axe de l'arbre 14 et les tubes 12 sont entraînés en mouvement alternatif curviligne comme indiqué par les flèches en figure 2.

Pour éviter que les échantillons contenus dans les tubes 12 soient portés pendant leur broyage à une température élevée par des microbilles de verre, de céramique ou toute autre matière appropriée contenues dans les tubes, l'invention prévoit de disposer des moyens de refroidissement 30 autour de la zone d'oscillation des tubes 12, ces moyens 30 comprenant une paroi annulaire 32 en forme de bol, portée par un socle 34 permettant de la positionner et de la fixer sur la partie 20 suspendue élastiquement de l'appareil.

Le socle 34 constitue également une chambre communiquant avec l'espace délimité par la paroi 32 et qui est équipée de moyens d'aspiration d'air, comprenant notamment un conduit d'aspiration 36 qui débouche à l'intérieur du socle 34 par une extrémité et dont l'extrémité opposée est destinée à être reliée à des moyens d'aspiration.

Dans un premier mode de réalisation, les moyens de refroidissement 30 sont réalisés en un matériau présentant de préférence une inertie thermique relativement élevée, et peuvent être portés à une température basse, par exemple de l'ordre de -60 à -100°C par des moyens appropriés, pour être ensuite mis en place dans l'appareil de broyage sur la partie 20 de cet appareil comme représenté en figure 2, juste avant de démarrer le broyage d'une série d'échantillons.

La paroi 32 rayonne alors du froid dans toute la zone d'oscillation des tubes 12 portés par le plateau 10, ce qui permet de maintenir la température des échantillons à des valeurs d'environ 4°C par exemple jusqu'à la fin du broyage.

L'air contenu à l'intérieur de la paroi 32, se réchauffe progressivement pendant le broyage des échantillons et est aspiré à l'extérieur au moyen du conduit 36, pour favoriser le refroidissement des échantillons.

Il est avantageux dans cette forme de réalisation que les moyens de refroidissement 30 puissent être mis en place sur l'appareil et retirés de cet appareil de façon simple et rapide. Ils peuvent être à cet effet équipés de moyens de fixation sur l'appareil qui sont du type à vissage rapide, à baïonnette, à encliquetage, etc.

Dans un autre mode de réalisation de l'invention, la paroi 32 des moyens de refroidissement est équipée de conduits ou de canaux 38 de circulation d'un fluide froid, permettant de maintenir la température de la paroi 32 à une valeur basse souhaitée, par exemple comprise entre -60 et -100°C. Le fluide froid peut être un gaz cryogénique, tel que l'azote, et les canaux 38 peuvent être équipés de buses 39 d'éjection de gaz froid sur les tubes.

Dans ce cas, les moyens de refroidissement 30 peuvent être fixés à demeure sur la partie suspendue 20 de l'appareil et être alimentés en fluide froid uniquement pour les opérations de broyage d'échantillons.

Dans une autre mode de réalisation, la paroi 32 des moyens de refroidissement peut être équipée d'éléments thermoélectriques générant du froid par effet Peltier.

Dans ce cas, les moyens de refroidissement 30 peuvent également être montés à demeure sur la partie 20 de l'appareil, et leurs éléments thermoélectriques sont alimentés en énergie électrique à l'occasion des opérations de broyage d'échantillons.

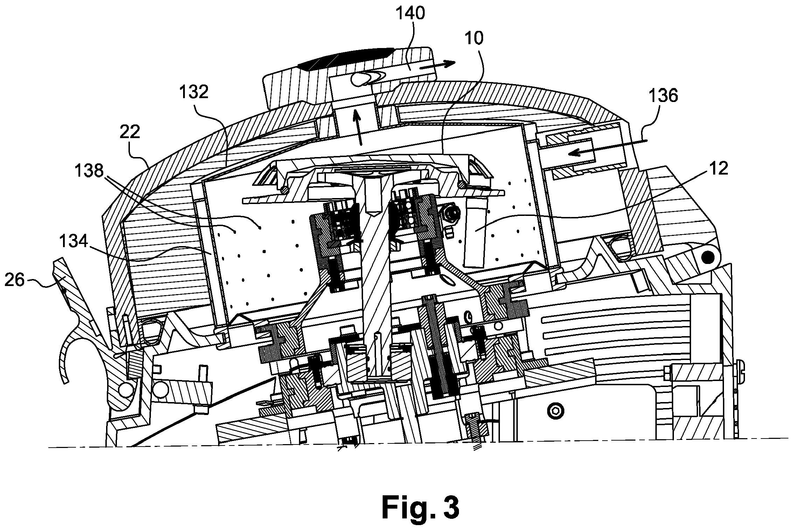

Dans la variante de réalisation de la figure 3, les moyens de refroidissement des tubes comprennent une cloche 132 fixée à l'intérieur du capot 22 de l'appareil, sensiblement au centre de ce capot, de façon à venir coiffer le plateau 10 et les tubes 12 quand le capot est rabattu en position de service et bloqué par les moyens de verrouillage 26.

Dans cette position, le bord inférieur de la cloche 132 est appliqué sur la partie 20 élastiquement suspendue de l'appareil.

La cloche 132 est à double paroi cylindrique. L'intervalle annulaire 134 défini par cette double paroi est raccordé à des moyens 136 d'amenée ou de circulation d'air froid, prévus sur une partie arrière du capot 22. La paroi interne de la cloche 132 comporte une pluralité de perforations 138 de sortie d'air froid, permettant de maintenir les tubes 12 à une température souhaitée pendant le broyage des échantillons.

L'air dans la cloche 132, qui s'est échauffé au contact des tubes 12, est évacué à l'extérieur du capot par un canal 140 formé dans la partie supérieure centrale du capot et de la cloche.

Par exemple, l'air froid amené par les moyens 136 est à une température de - 50° C et la température à l'intérieur de la cloche en fonctionnement est d'environ - 20° C.

Lorsque le plateau 10 de l'appareil est destiné à recevoir un certain nombre de tubes à échantillons 12, par exemple au nombre de 24 dans un mode de réalisation particulier de l'appareil, il est avantageux que les tubes 12 puissent être mis en place très rapidement sur le plateau 10.

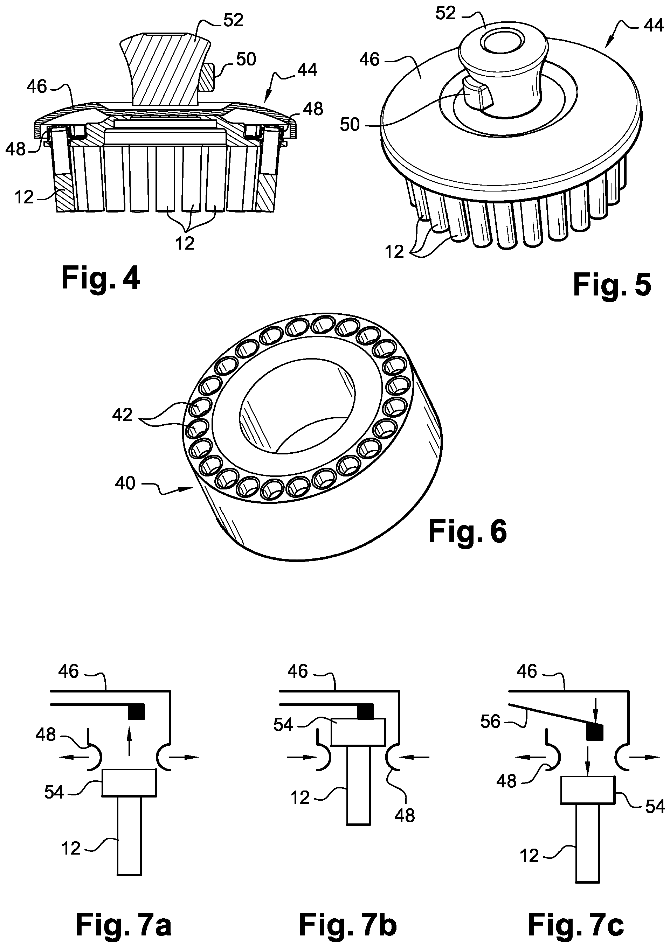

Pour cela, on utilise un accessoire représenté aux figures 4 et 5, destiné à saisir des tubes à échantillons qui sont disposés sur un support représenté en figure 6.

Ce support 40 est par exemple de forme cylindrique et comporte autant de logements 42 de tubes à échantillons que le plateau 10 de l'appareil de broyage.

Les logements 42 du support 40 sont disposés de la même façon que les logements des tubes 12 sur l'appareil 10 et sont répartis sur un cercle de même diamètre que le cercle formé par les logements des tubes sur le plateau 10.

Ces logements 42 ont une profondeur inférieure à la longueur des tubes 12, de façon à ce que les extrémités supérieures des tubes puissent dépasser assez largement des logements 42 pour être saisies facilement au moyen de l'accessoire 44 représenté aux figures 4 et 5.

Cet accessoire comprend essentiellement un capot annulaire 46 qui est équipé d'un certain nombre de moyens 48 de préhension des extrémités supérieures des tubes par encliquetage élastique.

Ces moyens de préhension 48 sont reliés à un organe commun de manoeuvre 50, tel qu'un bouton poussoir par exemple, qui est porté par une poignée centrale 52 du capot 46.

Le fonctionnement de l'accessoire 44 est illustré schématiquement par les figures 7a, 7b et 7c.

La figure 7a représente la prise d'un tube 12 par les moyens 48.

Il suffit pour cela de placer l'accessoire 44 au-dessus des tubes 12 placés dans les logements 42 du support 40, puis de descendre l'accessoire 44 sur ces tubes pour engager les moyens de prise 48 sur les bouchons 54 des tubes.

En poussant encore vers le bas, on engage les moyens d'encliquetage élastique 48 sous les bouchons 54 des tubes, comme représenté en figure 7b.

Il suffit alors de soulever l'accessoire 44 pour sortir tous les tubes 12 du support 40 et les positionner ensuite dans l'alignement de leurs logements du plateau 10 de l'appareil de broyage.

Lorsque les tubes 12 sont engagés dans ces logements, on appuie sur le bouton poussoir 50 de la poignée 52 pour libérer tous les tubes 12 par écartement des moyens 48 d'encliquetage élastique.

Pour cela, comme représenté en figure 7c, le bouton poussoir 50 peut être associé à des moyens 56 poussant sur les bouchons 54 des tubes pour les expulser vers le bas en écartant élastiquement au passage les moyens 48 d'encliquetage élastique.

On peut utiliser d'autres moyens en variante, par exemple une poignée rotative quart de tour ou tout autre moyen approprié.

Le support 40 et l'accessoire 44 permettent de stocker les tubes à échantillons 12 dans un endroit froid, par exemple à une température de 0°C ou très légèrement supérieure, puis de placer ensuite tous les tubes 12 dans leurs logements du plateau 10 en quelques secondes, sans leur laisser le temps d'être réchauffés par l'atmosphère ambiante.

L'accessoire 44 évite ainsi qu'un opérateur soit obligé de manipuler les tubes 12 un par un à la main pour les mettre en place sur le plateau 10 de l'appareil.

## Revendications

1. Appareil pour le broyage d'échantillons biologiques, comprenant un plateau (10) de support de tubes (12) contenant les échantillons et des moyens (16, 18) d'entraînement du plateau en mouvement oscillatoire autour d'un centre de rotation situé sur l'axe du plateau,
**caractérisé en ce que** des moyens (30) de refroidissement des tubes sont portés par une partie (20) de l'appareil et entourent le plateau précité pour délimiter une zone refroidie comprenant la zone d'oscillation des tubes (12) portés par le plateau,
les moyens de refroidissement comprenant une paroi annulaire (32) sensiblement en forme de bol, délimitant ladite zone refroidie et comportant des moyens (34) de positionnement ou de fixation sur une partie fixe (20) de l'appareil.

2. Appareil selon la revendication 1, **caractérisé en ce que** ladite paroi annulaire (32) est apte à avoir une température inférieure à 0°C pour absorber la chaleur dégagée par les tubes.

3. Appareil selon la revendication 1 ou 2, **caractérisé en ce que** ladite paroi annulaire comprend des moyens (38) d'amenée ou de circulation d'un fluide froid.

4. Appareil selon la revendication 3, **caractérisé en ce que** les moyens (38) de circulation sont équipés de buses (39) d'éjection de gaz froid sur les tubes.

5. Appareil selon la revendication 1 ou 2, **caractérisé en ce que** ladite paroi annulaire (32) comporte des moyens thermoélectriques de refroidissement.

6. Appareil selon l'une des revendications 1 à 5, **caractérisé en ce que** les moyens de refroidissement (30) comprennent des moyens (36) d'aspiration du gaz réchauffé présent à l'intérieur des moyens de refroidissement.

7. Appareil selon l'une des revendications précédentes, **caractérisé en ce que** les moyens de refroidissement (30) sont montés de façon fixe ou amovible sur la partie fixe (20) de l'appareil.

## Patentansprüche

1. Gerät zum Zermahlen von biologischen Proben, enthaltend eine Platte (10) zum Tragen von die Proben beinhaltenden Röhrchen (12) und Mitnahmemittel (16, 18) zum Mitnehmen der Platte in Schwingbewegung um einen Rotationsmittelpunkt, der auf der Achse der Platte liegt,
**dadurch gekennzeichnet, dass** Kühleinrichtungen (30) zum Abkühlen der Röhrchen von einem Abschnitt (20) des Geräts getragen werden und die vorgenannte Plate umgeben, um einen abgekühlten Bereich zu begrenzen, der den Schwingbereich für die von der Platte getragenen Röhrchen (12) enthält,
wobei die Kühleinrichtungen eine im Wesentlichen schalenartige, ringförmige Wand (32) enthalten, die den abgekühlten Bereich begrenzt und Einrichtungen (34) zum Positionieren bzw. Fixieren an einen festen Abschnitt (20) des Geräts enthält.

2. Gerät nach Anspruch 1, **dadurch gekennzeichnet, dass** die ringförmige Wand (32) dazu geeignet ist, eine Temperatur von unter 0°C zu haben, um die von den Röhrchen freigesetzte Wärme aufzunehmen.

3. Gerät nach Anspruch 1 oder 2, **dadurch gekennzeichnet, dass** die ringförmige Wand Einrichtungen (38) zum Zuführen bzw. Umwälzen eines kalten Mediums enthält.

4. Gerät nach Anspruch 3, **dadurch gekennzeichnet, dass** die Umwälzeinrichtungen (38) mit Ausstoßdüsen (39) zum Ausstoßen von kaltem Gas auf die Röhrchen ausgestattet sind.

5. Gerät nach Anspruch 1 oder 2, **dadurch gekennzeichnet, dass** die ringförmige Wand (32) thermoelektrische Kühleinrichtungen enthält.

6. Gerät nach einem der Ansprüche 1 bis 5, **dadurch gekennzeichnet, dass** die Kühleinrichtungen (30) Absaugeinrichtungen (36) zum Absaugen von erhitztem Gas enthalten, das innerhalb der Kühleinrichtungen vorliegt.

7. Gerät nach einem der vorangehenden Ansprüche, **dadurch gekennzeichnet, dass** die Kühleinrichtungen (30) fest oder abnehmbar an dem festen Abschnitt (20) des Geräts angebracht sind.

## Claims

1. Apparatus for grinding biological samples, the apparatus comprising a turntable (10) for supporting tubes (12) containing the samples and means (16, 18) for imparting oscillating motion to the turntable about a center of rotation situated on the axis of the turntable, the apparatus being **characterized in that** tube cooling means (30) are carried by a portion (20) of the apparatus and surround the above-mentioned turntable to define a cooled zone containing the zone in which the tubes (12) carried by the turntable oscillate,
the cooling means comprising an annular wall (32) substantially in the shape of a bowl, defining said cooled zone and including means (34) enabling it to be positioned or fastened on a stationary portion (20) of the apparatus.

2. Apparatus according to claim 1, **characterized in that** said annular wall (32) is suitable for having a temperature lower than 0°C in order to absorb the heat given off by the tubes.

3. Apparatus according to claim 1 or claim 2, **characterized in that** said annular wall includes means (38) for delivering or circulating a cold fluid.

4. Apparatus according to claim 3, **characterized in that** the circulation means (38) are fitted with nozzles (39) for ejecting cold gas against the tubes.

5. Apparatus according to claim 1 or claim 2, **characterized in that** said annular wall (32) includes thermoelectric cooling means.

6. Apparatus according to any one of claims 1 to 5, **characterized in that** the cooling means (30) include means (36) for sucking out the gas that has been heated that is present inside the cooling means.

7. Apparatus according to any preceding claim, **characterized in that** the cooling means (30) are mounted in fixed or removable manner on the stationary portion (20) of the apparatus.
